# EUROPEAN PATENT SPECIFICATION

(11) **EP 2 914 123 B1**
(45) Date of publication and mention of the grant of the patent: **23.09.2020**
(21) Application number: 13759025.3
(22) Date of filing: 30.04.2013
(51) Int. Cl.: A23K 10/38, F26B 11/04, F26B 17/10

(54) **AN IMPROVED PROCESS FOR THE DRYING OF WET CAKE AND CONDENSED THICK STILLAGE USING TWO STAGE DRYER**
VERBESSERTES VERFAHREN ZUM TROCKNEN VON NASSKUCHEN UND KONDENSIERTER DICKSCHLEMPE MIT EINEM ZWEISTUFIGEN TROCKNER
PROCÉDÉ AMÉLIORÉ DE SÉCHAGE DE GÂTEAU HUMIDE ET DE RÉSIDUS DE DISTILLATION ÉPAIS CONDENSÉS À L'AIDE D'UN SÉCHOIR À DEUX ÉTAPES

(30) Priority: 05.11.2012 IN 3207MU2012
(43) Date of publication of application: 09.09.2015
(73) Proprietor: Mojj Engineering Systems Ltd., Pune 411026 Maharashtra (IN)
(72) Inventor: OKE, Dhirendra W., 411026 Pune Maharashtra (IN)
(74) Representative: Paulraj, Leonita Theresa
(86) International application number: PCT/IN2013/000287
(87) International publication number: WO 2014/068584

(56) References cited:
- WO-A1-97/19307
- FR-A- 1 166 095
- US-A1- 2005 233 030
- US-A1- 2006 057 251
- KINGSLY A R P ET AL: "The effect of process variables during drying on the physical and chemical characteristics of corn dried distillers grains with solubles (DDGS) - Plant scale experiments", BIORESOURCE TECHNOLOGY, ELSEVIER BV, GB, vol. 101, no. 1, 21 August 2009 (2009-08-21), pages 193-199, XP026623991, ISSN: 0960-8524, DOI: 10.1016/J.BIORTECH.2009.07.070 [retrieved on 2009-08-21] cited in the application
- SAUNDERS J A ET AL: "Survey of US fuel ethanol plants", BIORESOURCE TECHNOLOGY, ELSEVIER BV, GB, vol. 100, no. 13, 16 March 2009 (2009-03-16), pages 3277-3284, XP026063280, ISSN: 0960-8524, DOI: 10.1016/J.BIORTECH.2009.01.071 [retrieved on 2009-03-16]

## Description

**Technical Field of Invention:** The present invention relates to an improved process for the drying of wet cake and Condensed Thick Stillage (CTS) from various starch based ethanol distilleries. Particularly, it relates to a process for the drying of wet cake together with condensed thick stillage from various starchy substrates such as grain sorghum, corn, cassava, and particularly broken rice based ethanol distillery using two stage dryer wherein the blend of wet cake and CTS is dried to the desired moisture content for its use in the feed Industry. More particularly by using the present process of two stage drying wherein a mixture of wet cake and the condensed thick stillage is dried at lower product temperature by first drying in steam tube rotary dryer to an intermediate moisture content, following which the fully dried/ semidried Dried Distillers Grain Soluble (DDGS) is again mixed with CTS and further dried using spin flash dryer/pin mill type flash dryer to obtain the dry DDGS with required 10-12% moisture content.

### Background of the invention and the prior art:

Manufacturing of bio ethanol from various starchy raw materials such as sorghum, corn, cassava is being practiced all over the world. Broken rice is also being considered as one of the raw material for the production of bio ethanol and few plants have been set up in India during last few years. Normally dry milling process is being used for the production of bio ethanol because of its well-known advantages over wet milling process. Production of bio ethanol by the dry milling process results in a primary co-product called DDGS. It is produced by blending and drying the non fermentable residue in corn after fermentation of starch, i.e.Wet Distillers Grain (WDG) and Condensed Distillers Soluble (CDS).

After the fermentation of starch the fermented beer is distilled to obtain bio-ethanol and the whole stillage containing non fermentable portion of corn/sorghum/broken rice grain is centrifuged to separate insoluble solids from liquids (thin stillage). Part of thin stillage is reused for making the initial slurry (back set) and remaining thin stillage is further condensed by using integrated/ steam driven evaporators to a syrup known as Condensed Distillers Soluble (CDS) or Concentrated Thick Stillage (CTS) containing about 30-50 % solids. The insoluble solids with about 65-70% moisture (weight basis) known as wet cake or Wet Distillers Grains (WDG) is mixed with CDS and dried in a rotary dryer to produce DDGS. The operational parameters of rotary dryers are usually controlled to result in a stable product within the moisture content ranging from 10-12%.

Due to the presence of high nutritive components such as protein, fat, minerals, vitamins and starch, DDGS is highly valued as animal feed supplement. The physical and chemical properties of DDGS are normally the measure to indicate the identity of a particular DDGS product. The process parameters, such as the wet cake and CDS blend characteristics, the dryer configuration and drying temperature play an important role in the quality of the final DDGS product.

For the ethanol industry, shelf life and other factors influencing transportation logistics of DDGS such as product flow and caking in storage and transport vessels are important to its marketability and economic viability.

Lot of research work is going on in this area to improve the process and also the nutritional component of the feedstock thereby generated. Han et. al. in J Agr Food Chem March 2010, 58(6) 3430-37 have analysed the amino acid profile using dry grind ethanol processing from corn and estimated contribution of yeast toward the DDGS proteins to be 20%.

Lamsal etal. 2011 in Biosource technology, 102 (12) 6680-86 compare two corn preparation methods, roller mill flaking and hammer mill grinding for efficient processing of corn into ethanol by granular starch hydrolysis and simultaneous fermentation by yeast.

Recent publication by A.R.P. Kingsly, K.E. Lleleji, C. L. Clementson, A. Garcia, D. E. Maier, R. L. Stronshine, S. Radcliff, "Bioresource Technology" 101 (2010) 193-199 and the references therein elaborate the DDGS drying process and the two stage rotary dryer used by most of the corn based distilleries in USA. The proportion of WDG, CDS and recycled dry DDGS to blend to be submitted for drying in first and second stage dryers play very important role on the final quality of the DDGS. Certain technical parameters and blend characteristics are of proprietary nature and are not available in the open literature.

US patent application 2007/0036881 A1 discloses the process for drying of WDG and CDS wherein the thin stillage containing 7-10%solids is treated by electro coagulation and polyacrylamide flocculation before sending to a rotary screen drum and settling tank. The settling tank supernatant is then sent to evaporator. Condensate is taken off from evaporator and the syrup is then sent to DDGS dryer. Using this process the DDGS is dried with lower energy due to removal of additional solids in the evaporation before drying.

US patent application 20090181126A1 discloses a process for drying of DDGS by initial water removal by mechanical devise and pelletizing the material and further water removal by microwave treatment. Optionally various enzymes, vitamins, mineral or other nutrients and the mixture is dried at low temperature to preserve the enzyme activity and /or nutrient and feed quality.

US 7695747 to Meier describes production of dried distiller grain wherein distiller wet grain and liquids contained in the stillage are separated from one another and distiller wet grain is agglomerated which are later irradiated with microwave emitter.

Normally, in areas where natural gas is accessible as a fuel for generating the hot air a single stage or two stage rotary drum dryer with hot air is used as a heating media, at a temperature of 450-500 °C.

Availability of the natural gas for generation of hot air of temperature 450-500°C as used in the prior art poses limitation of using those dryers, particularly in countries like India where natural gas is not available in vicinity of the ethanol distillery. Utilization of higher temperature of 450-500°C also has adverse effect on the nutritional value of DDGS hence lower temperature drying is preferred. Low temperature drying helps to ensure better product digestibility for swine / poultry.

World over the DDGS Dryers are mostly catering to drying of partial quantity of wet cake and CDS and remaining syrup is sold as it is without drying. This is easier to execute in cold climates where the ambient temperature is around 15°C and mixture of wet cake +CDS can be retained for a week without foul smell/ putrification.

Addition of CDS in CDS to wet cake ratio in excess of 1:1 is not successful in single stage dryer at reasonably low product temperatures of 85 to 90°C. Increasing the drying temperature and hence the material temperature leads to dark color of burnt proteins is not at all desirable.

The Acid Detergent Insoluble Nitrogen (ADIN) value of DDGS which to a large extent gives extent of protein damage is also high with single stage DDGS Dryers.

To overcome the drawbacks of the prior art, steam tube bundle rotary dryers are being tried for drying wet cake and CDS mixture using local steam available in the plant. However due to low temperature steam availability and indirect heating the steam tube bundle rotary dryer is not that efficient in drying the wet cake and CDS as compared to hot air dryer. Steam tube bundle rotary dryer is also rendered inefficient due to fouling of tube with viscous CDS/wet cake blend acting as an insulator layer on the tube surface reducing the heat transfer required for drying of the wet cake on the tube surface. Formation of wet particulate aggregates in the steam tube rotary drier also inhibits its further drying and results in the final DDGS product with 15-20% moisture content making it unsuitable for marketing as animal feed supplement. Due to the indirect heating of wet cake/CDS blend in the rotary steam tube dryer, the amount of CDS in the blend needs to be maintained below certain amount which limits the capacity utilization for CDS drying and hence the full utilization CDS generated in the process needs design of larger rotary dryers with heavy investment and higher energy requirement affecting the overall economics of the process.

Apart from the above-mentioned limitations, drying of DWG and CDS from various starch sources particularly broken rice based ethanol distillery is still a challenging task because of the specific nature of DWG and CDS as there is less fibrous material and also the CDS is very viscous and also contains very fine particulate fibres.

Therefore there still remains a need in the prior art to provide an improved drying process and equipments/dryer for drying of DWG and CDS to manufacture good quality DDGS from various starch based ethanol plants and particularly using broken or boiled rice as feed stock.

We in this invention have come-up with a two stage drying process wherein a mixture of wet cake and the condensed thick stillage is dried at lower temperature by the first drying in steam tube rotary dryer followed by second spin flash dryer/pin mill type flash dryer to obtain the dry DDGS with required 10-12% moisture content. By using the present combination of rotary and spin flash dryer/pin mill type flash dryer the distillery wet cake and condensed thick stillage is dried at lower temperature wherein the nutritional value of the DDGS is well maintained along with the desired moisture content and particularly desired particle size. The present process and the two stage DDGS drying, the wet cake and condensed thick stillage from the starch based distillery particularly using Broken or Boiled Rice as feed stock is dried with better steam and power efficiency as also resulting in improved DDGS quality with better nutritional value for its use as animal feed/ fish meal supplement. The invention bypasses any need for the natural gas source or microwave emitters as used in the prior art adding up to the cost and in turn utilizes the steam generated in the plant itself. Also this process overcomes the limitation of adding the additives, additional fibrous matrix etc to improve the nutritional content of the feed stock produced.

### The objective of the invention:

The main objective of the present invention is to develop an improved process for drying of DWG and CDS from various starchy material based ethanol distillery particularly using Broken or Boiled Rice as feed stock to manufacture DDGS of desired quality using two stage drying wherein the first drying will be carried out using steam tube bundle rotary dryer and in second stage using spin flash dryer/pin mill type flash dryer. The DDGS so obtained is preferably of particle size 600-2000 microns, moisture content of 10-12% with better nutrient and feed quality wherein the protein content is 37-53%, fat 10-11 %, Crude fibre 6.2%, Ash 7-8%, Nitrogen-Free Extract (NFE) 42%, Acid Detergent Fibre (ADF) up to 11%. Another main objective of the invention is to provide equipments/dryers wherein the two stage process as per the invention may be carried out efficiently.

### Summary of the invention:

In accordance with the object, the present invention provides a process for the drying of DWG and CDS from starch based ethanol distillery to obtain Dried Distillers Grain Soluble (DDGS) as set out in claim 1. The preferred features have been defined in claims 2 to 9. The DWG and CDS may be mixed together to obtain a blend of desired characteristics having free flowing with moisture content of about 50% and subjected to two stage drying process to obtain DDGS of good quality to be used as animal feed supplement/ fish supplement.

According to an aspect of invention DDGS so obtained is preferably of particle size 600-2000 microns, moisture content of 10-12% with better nutrient and feed quality wherein protein content is 37-53 %, fat 10-11%, Crude fibre 6.2%, Ash 7-8%, Nitrogen-Free Extract (NFE) 42%, Acid Detergent Fibre (ADF) up to 11%.

Accordingly the invention provides equipments/dryers wherein the two stage process may be carried out efficiently.

In an aspect of the present invention, the DWG and CDS from feeds such as corn, sorghum, cassava, preferably rice or broken rice or boiled rice is dried at lower product temperature (range 85 to 95 °C) using two stage drying process.

According to the invention the two stage drying includes first stage being steam tube bundle rotary drying followed by spin flash dryer/pin mill type flash dryer.

According to an embodiment of the invention, the starch base is more preferably broken rice, and/ or Boiled rice enabling drying CDS to wet solid, in range of 0.8-1.7

In yet another aspect, the DWG and CDS is mixed with dry DDGS to obtain a blend of having 45 to 55% solids in first stage feed and 20 to 30% solids in second stage feed and subjected to two stage drying DDGS of desired quality.

In yet another aspect, the DWG and CDS is mixed with dry DDGS using a mixer/blender to obtain a blend wherein the solid content is between 45 to 55% in the first stage and 20% to 35% before second stage and such blend is subjected to two stage drying at 85 to 95 °C in the first stage and 65 to 70 °C material temp in the second stage using low pressure steam as a heating medium to obtain DDGS of desired quality.

In yet another aspect, the DWG and CDS is mixed with dry DDGS using a mixer/blender to obtain a blend wherein DDGS/DWG solids ratio is 1.9 to 2.8 and CDS is added to have CDS solids maximum 30% of DWG solids to obtain a blend of approximately 50% to 60% solids or preferably 52 to 55% solids w/w prior to first stage and subjected first to a steam tube bundle rotary dryer and using low pressure steam at 3.5 to 6.00 bar g as heating medium.

In yet another aspect, the DWG and CDS is mixed with dry DDGS using a mixer/blender to obtain a blend of desired nature as specified above and subjected first to a steam tube bundle rotary dryer and in second stage using spin flash dryer/pin mill type flash dryer where higher proportion up to 80% of liquid proteins are added and dried at lower material temperature of 65 to 80 °C.

In yet another aspect, the DWG and CDS wherein the semidried DDGS is mixed with CDS and dry DDGS using mixer / blender to obtain a blend approximately 20% to 40% solids or preferably 22% to 35% solids w/w and subjected to spin flash dryer/pin mill type flash dryer dryer to obtain DDGS of desired quality.

In yet another aspect, the DWG and CDS from broken rice based ethanol plant is mixed with dry DDGS using a mixer/blender to obtain a blend of desired nature and subjected first to a steam tube bundle rotary dryer and in second stage is mixed with partly with dry DDGS and subjected to spin flash dryer/pin mill type flash dryer to obtain DDGS of desired quality.

In yet another aspect, the CDS from broken rice based ethanol distillery is treated with lime/caustic/flocculent to adjust the pH to 6.5 - 7.0 to remove the proteins and drying of the blend at temperature of 85-95 °C using steam at pressure of 3.5 to 6.0 bar g steam using two stage drying process.

According to another aspect of the invention the DDGS is cooled at 25-35 °C by spreading in the storage area or optionally subjecting to cascade type air cooler and bagging for transport to end users.

### Detail description of figures

Fig: 1: Illustrates entire scheme of drying process
Fig 2: Illustrates Dryer Specifications of the First Stage.
Fig 3: Illustrates spin /pin mill type flash dryer specification of the Second Stage.

### Detail description of the invention

The invention details a commercially feasible, easy and improved process for drying of Distillers Wet Grain (DWG) and Condensed Distillers Soluble (CDS) from various starchy material based ethanol distillery to manufacture Dried Distillers Grain Soluble (DDGS) of desired quality. The process involves a novel approach of using two stage drying wherein the first drying will be carried out using steam tube bundle rotary dryer and in second stage using spin flash dryer/pin mill type flash dryer.

DDGS produced by the current invention is having high nutrient quality and other essentials which improve the digestibility of the product when used as animal feed supplement. DDGS so obtained is preferably of particle size 600-2000 microns, moisture content of 10-12% with better nutrient and feed quality wherein the protein content is 37-53% fat 10-11%, Crude fibre 6.2%, Ash 7-8%, Nitrogen-Free Extract (NFE) 42%, Acid Detergent Fibre (ADF) upto 11%,

The DWG (Distillers Wet Grain) in the present process is defined as wet cake obtained from whole stillage by subjecting to a decanter wherein the non fermented solids are separated and thin stillage thus obtained is concentrated using evaporators called Condensed Distillers' Solids (CDS).

According to the present invention, the DWG and CDS from starch such as corn, sorghum, cassava, preferably rice or broken rice, boiled rice has been used to produce DDGS. The invention more particularly uses broken rice, and/or Boiled rice which enables to dry CDS to wet solid as high as 1.7 in case of Rice as feed material in Distillery to as low as 0.8 in case of Millet or Maize.

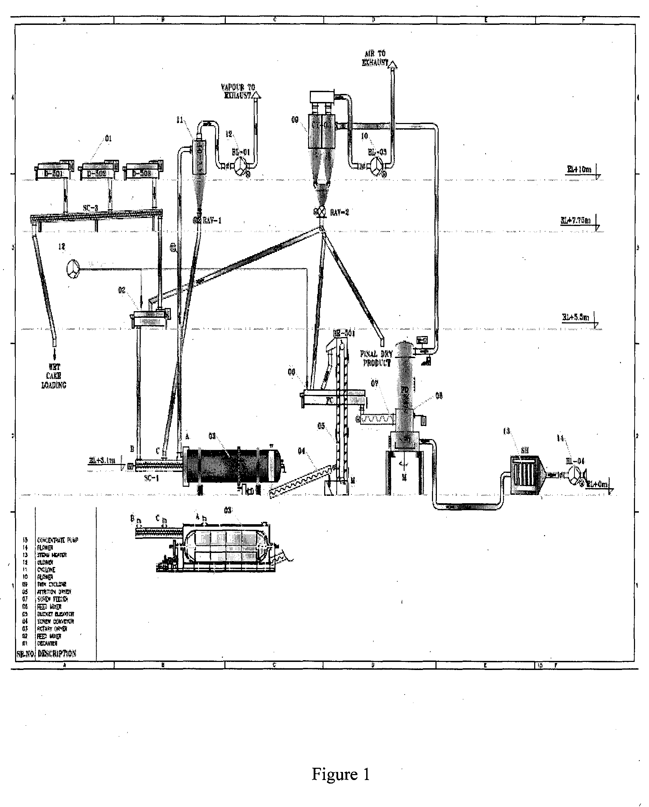

The DDGS in present process as completely illustrated in Fig. 1, is defined as dry coproduce of grain based industry having 10-12% moisture used as feed supplement.

The present description also relates to drying process related equipments not limited to reactors, dryers and other devices for DWG and CDS from starch based ethanol distillery wherein this process may be carried out.

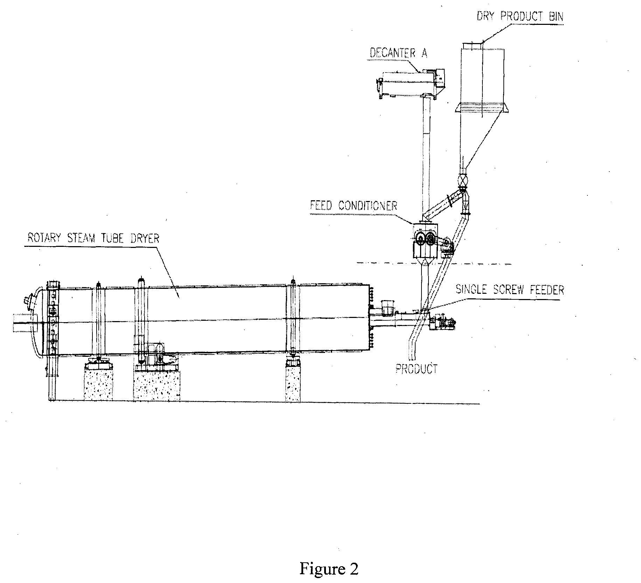

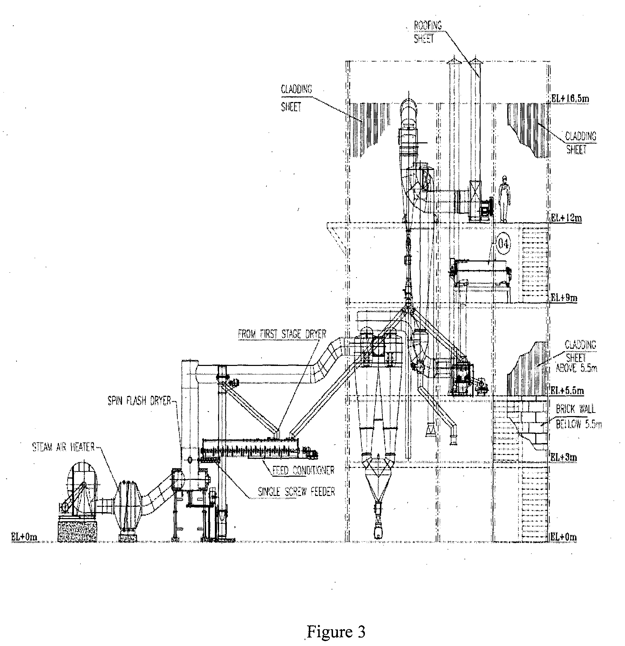

The present invention relates to a process comprising: (Numbering order below is with reference to Fig.1)
a. Subjecting whole stillage containing solids after fermentation and alcohol distillation to decanter (1) to obtain DWG and thin stillage.
b. Concentrating thin stillage, after distillation process, to thick stillage CDS by using integrated evaporators using alcohol vapors from distillation process or using steam driven independent evaporators using fresh steam or using scrubbed evaporated vapors from First Stage Dryer (Exit of blower(12)) to obtain CDS of 30% to 55% w/w preferably 40% to 45% w/w.
c. Mixing the DWG, CDS from Pump (12) and with dry DDGS using a mixer /blender (2) to obtain the blend with ∼60 Deg as angle of repose and having approximately 45 to 60% solids or particularly 48 to 50% solids w/w prior to first stage.
d. Subjecting the DWG, CDS and DDGS blend to steam tube bundle drying (3) in a dryer (Two Alternative Designs shown) as shown in Fig 1 & 2. The first stage steam tube bundle rotary dryer used consists of bundle of horizontal tubes through which the steam is passed and the DWG, CDS and DDGS blend is circulated for drying by rotating the dryer at a speed of 1 to 4 RPM.
e. Operating the dryer with steam in the tubes using low pressure steam at 3.5 to 6.00 bar g as heating medium and the blend in the surrounding shell to obtain semi dried DDGS with desired moisture between 84 to 90 % solids.
f. Mixing the semidried DDGS with fresh CDS from pump (12) and dried DDGS using mixer blender (6) to obtain the blend of desired consistency and textural characteristics of approximately 20 to 40% solids or particularly 22 to 35% solids w/w prior to second stage.
g. Subjecting the semidried DDGS with fresh CDS and dried DDGS blend to spin flash dryer/pin mill type flash dryer (8) is shown Fig 1 & 3 at a material temperature of 65 to 95 °C. The hot air temperature of the dryer was maintained at a temperature range of 80-250°C. The flash dryer of the invention is preferably with inbuilt Attritor/disintegrator of Horizontal or Vertical construction.
h. Collecting the dried DDGS with 10-12% moisture in a DDGS cyclone (9) using a conveying system without any hard lumps of size more than 2 to 3 mm size in a silo. Spreading the DDGS in collection area for cooling purpose or passing the DDGS through a cascade type product cooler. The cooling occurs at a temperature of 25-35 °C by spreading in the storage area or subjecting to cascade type air cooler.
i. Bagging the dry DDGS for transport to end users for its use as feed supplement in poultry, animal husbandry feed, and fish farming industry.

Alternately, the present process of drying DWG and CDS comprises adjusting the pH of the whole stillage/thin stillage to neutral pH to 6.5- 7 using lime/caustic/flocculent. Adjusting pH separates the dissolved proteins and subjecting the resulting whole stillage to decanter for separating the solids as DWG which reduces the amount of CDS generated and in turn the process requires lower energy/steam for drying process.

The present invention is described in further details with reference to examples which are given by way of illustration only and therefore should not be restricted the scope of invention.

### Example: 1

The DWG and CDS from grain Sorghum based ethanol plant of 60,000 litres per day capacity using dry milling process was dried using two stage drying process and the entire scheme of drying process is shown in fig 1. The whole stillage obtained from the distillation process is subjected to a decanter where the solids (DWG) and thin stillage are separated for further treatment. Thin stillage generated during the separation of solids and liquid of whole stillage was partly recycled for the liquification process (upto 20% to 50%) and remaining thin stillage was concentrated to thick stillage (CDS). The amount of DWG was about ∼55 tons/day with 30% solid and 70% moisture. The CDS generated from this plant was about 57000 litres per day with 35-40% solid and 60-65% moisture.

The DWG and CDS were mixed with dry DDGS in a proportion to obtain the blend with 50 to 55% solid using a mixer blender and the resulting free flowing blend was subjected to the rotary steam tube dryer where the steam temperature was maintained at 180 °C and pressure at 3.5 bar g as in fig 2. The steam is passed and the DWG, CDS and DDGS blend is circulated for drying by rotating the dryer at a speed of 1 to 4 RPM .The semi dried DDGS coming out from the rotary steam tube dryer was mixed with remaining CDS and dry DDGS in a proportion to obtain a blend with 30-35% solids using a mixer/blender and subjected to flash dryer where the temperature of the hot air was maintained at about 140°C as in fig 3. The product coming out from spin flash dryer/pin mill type flash dryer was received in a cyclone was anlaysed for its nutrient contents and further cooled at 25 °C in collection area. The results are as compiled in Table 1 below:

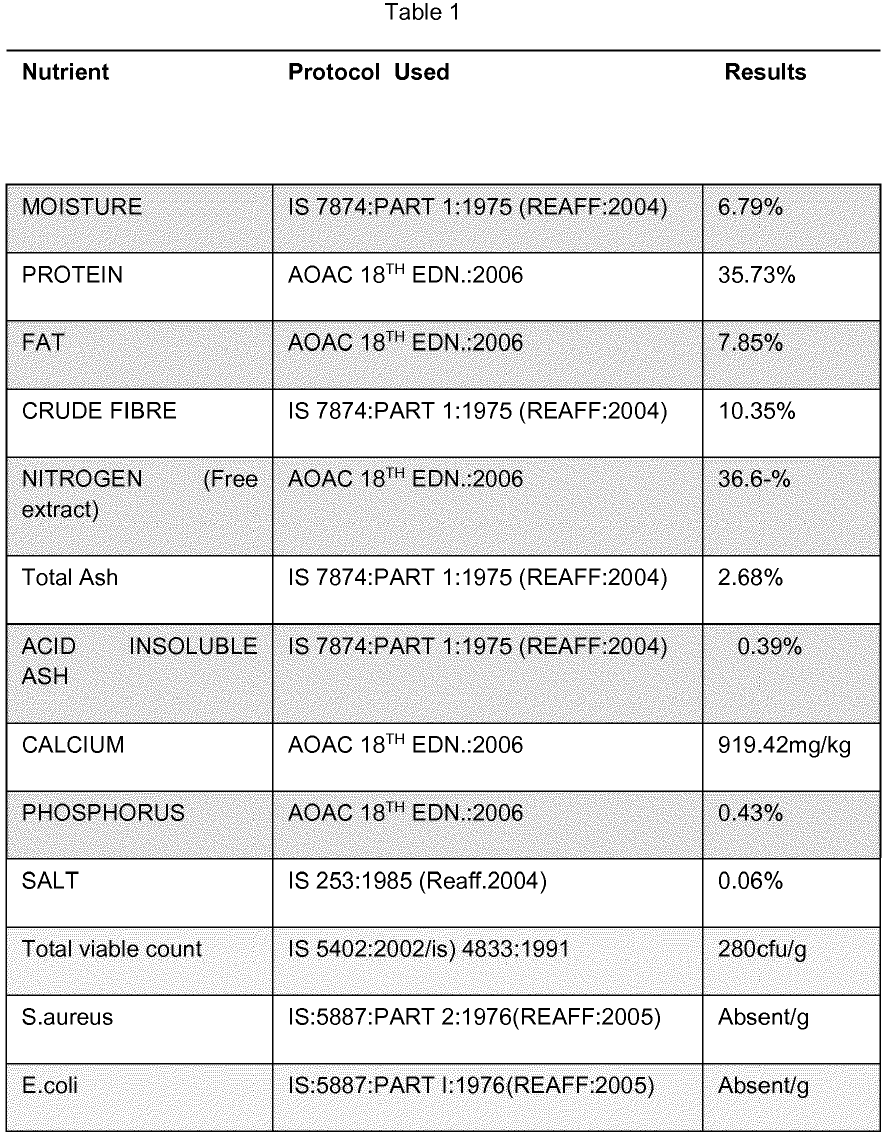

The final moisture content of the DDGS was about 10-12% and its analysis for its nutritional value met the specifications required by animal feed industry as also described in specification.

### Example: 2

The DWG and CDS from corn based ethanol plant of 60,000 Litres per day capacity using dry milling process was dried using two stage drying process and the entire scheme of drying process is shown in fig 1. The whole stillage obtained from the distillation process is subjected to a decanter where the solids (DWG) and thin stillage are separated for further treatment. Thin stillage generated during the separation of solids and liquid of whole stillage was partly recycled for the liquification process (upto 40% to 50%) and remaining thin stillage was concentrated to thick stillage CDS. The amount of DWG was about 61 tons/day with 27% solid and 73% moisture. The CDS generated from this plant was about 66000 liters per day with 35% solid and 65% moisture.

The DWG and CDS were mixed with dry DDGS in a proportion to obtain the blend with 45 to 50% solid using a mixer blender and the resulting free flowing blend was subjected to the rotary steam tube dryer where the steam temperature was maintained at 190°C and pressure of 4 bar g as in fig 2. The semi dried DDGS coming out from the rotary steam tube dryer was mixed with remaining CDS and dry DDGS in a proportion to obtain a blend with 25-30 % solids using a mixer/blender and subjected to spin flash dryer/pin mill type flash dryer where the temperature of the hot air was maintained at about 120°C as in fig 3. The product coming out from spin flash dryer/pin mill type flash dryer was received in a cyclone and further cooled in collection area. The final moisture content of the DDGS was about 10-12% and its analysis for its nutritional value met the specifications required by animal feed industry.

### Example: 3

The DWG and CDS from broken rice based ethanol plant of 60000.00 litres per day capacity using dry milling process was dried using two stage drying process and the entire scheme of drying process is shown in fig 1. The whole stillage obtained from the distillation process is subjected to a decanter where the solids (DWG) and thin stillage are separated for further treatment. Thin stillage generated during the separation of solids and liquid of whole stillage was partly recycled for the liquification process and remaining thin stillage was treated with lime solution to adjust pH about 6.5 to 7 to solidify and separate the dissolved proteins. The resulting stillage with solid proteins is centrifuged to separated the solid as DWG and thin stillage. The thin stillage was concentrated to thick stillage CDS. The amount of DWG was about 60 tons/day with 30% solid and 70% moisture. The CDS generated from this plant was about 53000 liters per day with 38 to 40% solid and 60-62% moisture.

The DWG and CDS were mixed with dry DDGS in a proportion to obtain the blend with 45 to 50% solid using a mixer blender and the resulting free flowing blend was subjected to the rotary steam tube dryer where the steam temperature was maintained at 180°C and pressure of 4.5 bar g as in fig 2. The semi dried DDGS coming out from the rotary steam tube dryer was mixed with remaining CDS and dry DDGS in a proportion to obtain a blend with 20-30% solids using a mixer/blender and subjected to flash dryer where the temperature of the hot air was maintained at about 90 to 145°C as in fig 3 and evaluated for its nutrient value.

The product coming out from spin flash dryer/pin mill type flash dryer was received in a cyclone and further cooled in collection area. The final moisture content of the DDGS was about 10-12% and its analysis for its nutritional value met the specifications required by animal feed industry as in table 2 and in table 3 for two different varieties of broken rice

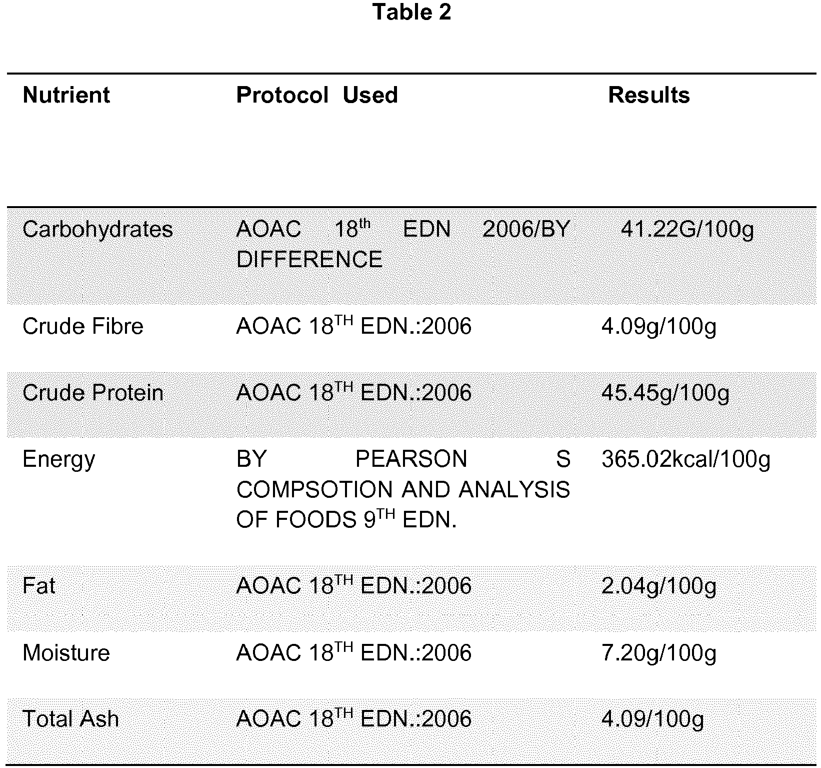

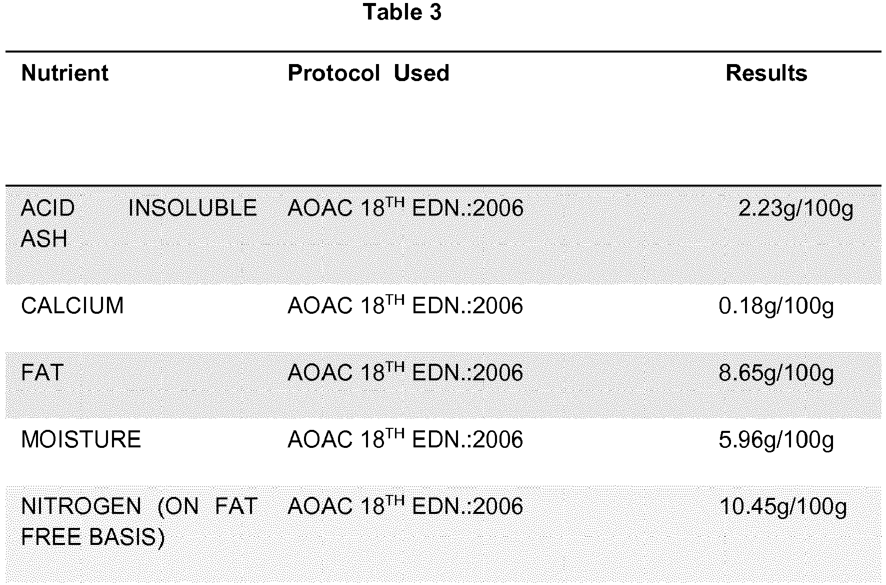

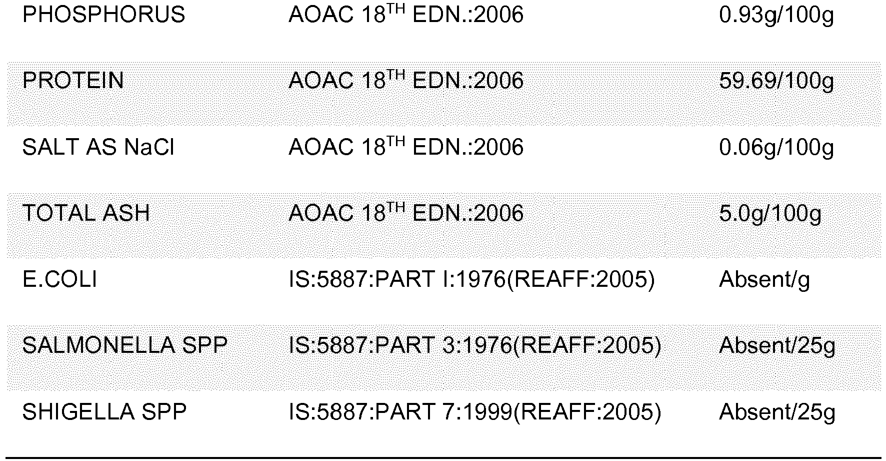

### Advantages of the Invention:

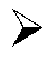 The improved process produces DDGS meeting international nutrient standards without agglomerates and oversize particles having higher moisture in the core which increases digestibility of animal feed.
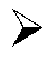 Distillery now can consume the entire CDS. This increases the protein content of DDGS and hence achieves better value realisation.
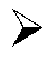 The process used is energy efficient, cost effective and practice able on large scale.
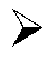 Steam generated in the distilleries is used for heating hence this makes the process economically viable bypassing the need of procuring natural gas and other specific requirement otherwise used to carry out the process.
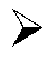 Distillery now can consume the entire CDS. This increases the protein content of DDGS and hence achieves better value realisation.
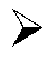 The process used is energy efficient, cost effective and practice able on large scale.
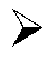 Steam generated in the distilleries is used for heating hence this makes the process economically viable bypassing the need of procuring natural gas and other specific requirement otherwise used to carry out the process.

## Claims

1. An improved process for drying of Wet Solids (DWG) and Condensed Distillers Solubles (CDS) from starch based ethanol distillery to obtain Dried Distillers Grain Soluble (DDGS), the said process comprising:
a. Subjecting the whole stillage containing solids after fermentation and alcohol distillation to decanter to separate wet solids (DWG) and the thin stillage,
b. Concentrating thin stillage using integrated evaporator and steam evaporator combination to obtain CDS of 30% to 50% w/w,
c. Mixing the DWG and CDS with dry DDGS to obtain a blend with∼60° as angle of repose and 45 % to 60% solids, wherein the DWG and CDS from starch based ethanol distillery is dried using a two stage dryer;
d. Subjecting the blend of step (c) to a first stage steam tube bundle rotary dryer for intermediate drying using low pressure steam at 3.5 to 6 bar g and material temperature of 85- 95°C, wherein the first stage steam tube bundle rotary dryer consists of a bundle of horizontal tubes through which the steam is passed and the DWG, CDS and DDGS blend is circulated for drying by rotating the dryer at a speed of 1 to 4 RPM,
e. Mixing of semi dried DDGS with CDS and dried DDGS to obtain a blend of approximately 20% to 40% solids or preferably 22% to 35% solids w/w prior to second stage,
f. Subjecting the first stage blend of semidried DDGS, CDS and dried DDGS to spin flash dryer/pin mill type flash dryer, wherein the drying is using hot air at a temperature of 90-150°C and collecting the dried DDGS without any hard lumps of size more than 2 to 3 mm size in a silo using conveying system,
g. Cooling the dried DDGS at 25-35 °C by spreading in the storage area or subjecting to cascade type air cooler and bagging for transport to end users.

2. The process as claimed in claim 1, wherein the starch base is preferably from grain sorghum, corn, broken rice, boiled rice and cassava starch.

3. The process as claimed in claim 1, wherein the starch base is more preferably broken rice, and/or boiled rice enabling drying CDS to wet solid, in range of 0.8-1.7.

4. The process as claimed in claim 1, wherein the whole stillage pH may optionally be adjusted to neutral or slightly alkaline pH ranging from 6.5 to 7.0 to separate proteins.

5. The process as claimed in claim 4, wherein the pH is adjusted using lime/caustic/flocculent.

6. The process as claimed in claim 1, wherein the DWG and CDS from starch based ethanol distillery is mixed with dry DDGS using a mixer/blender in a proportion wherein DDGS/DWG solids ratio is 1.9 to 2.8 and CDS is added to have CDS solids maximum 30% of DWG solids to obtain a blend of approximately 50% to 60% solids or preferably 52% to 55% solids w/w prior to first stage.

7. The process as claimed in claim 1, wherein the spin flash dryer/pin mill type flash dryer is preferably with inbuilt Attritor/disintegrator of Horizontal or Vertical construction.

8. The process as claimed in all above claims yields DDGS to be used as animal feed having preferably particle size of 600-2000 microns and 10-12% moisture content.

9. The process as claimed in all above claims, which yields DDGS to be used as animal feed supplement is having better nutritional value wherein the protein content is 37- 53%, fat 10-11%, Crude fibre 6.2%, Ash 7-8%, Nitrogen Free Extract (NFE) 42% and Acid Detergent Fiber (ADF) upto 11%.

## Patentansprüche

1. Verbesserter Prozess zum Trocknen von feuchten Feststoffen (Distiller Wet Grains, DWG) und löslichen Destillationsfeststoffen (Condensed Distillers Solubles, CDS) aus der stärkebasierten Ethanoldestillation zum Erhalten von Trockenschlempe (Dried Distillers Grain Soluble, DDGS), der Prozess umfassend:
a. Behandeln der gesamten Feststoffe enthaltenden Schlempe in einem Dekanter nach der Gärung und der Alkoholdestillation, um feuchte Feststoffe (DWG) und die Dünnschlempe abzutrennen,
b. Konzentrieren der Dünnschlempe unter Nutzung einer Kombination aus einem integrierten Verdampfer und einem Dampfverdampfer, um CDS mit einem Massenanteil von 30 % bis 50 % zu erhalten,
c. Mischen der DWG und CDS mit trockener DDGS, um eine Mischung mit einem Reibungswinkel von ∼60° und 45 % bis 60 % Feststoffgehalt zu erhalten, wobei die DWG und CDS aus der stärkebasierten Ethanoldestillation unter Nutzung eines Zweistufentrockners getrocknet werden;
d. Behandeln der Mischung aus Schritt (c) in einem Dampfrohrbündel-Rotationstrockner der ersten Stufe zur Zwischentrocknung unter Nutzung von Dampf mit geringem Druck bei 3,5 bis 6 bar Überdruck bei einer Materialtemperatur von 85-95 °C, wobei der Dampfrohrbündel-Rotationstrockner der ersten Stufe aus einem Bündel horizontaler Rohre besteht, durch die Dampf geleitet wird, und die Mischung aus DWG, CDS und DDGS zum Trocknen zirkuliert wird, indem der Trockner bei einer Geschwindigkeit von 1 bis 4 U/min gedreht wird,
e. Mischen von halbgetrockneter DDGS mit CDS und getrockneter DDGS, um eine Mischung mit einem Feststoffgehalt von etwa 20 % bis 40 % oder bevorzugt 22 % bis 35 % vor der zweiten Stufe zu erhalten,
f. Behandeln der Mischung aus halbgetrockneter DDGS, CDS und getrockneter DDGS in einem Wirbelschnelltrockner/Stiftmühlen-Schnelltrockner, wobei das Trocknen Heißluft bei einer Temperatur von 90-150 °C verwendet, und Sammeln der getrockneten DDGS ohne harte Klumpen mit einer Größe von mehr als 2 bis 3 mm in einem Silo unter Nutzung eines Fördersystems,
g. Kühlen der getrockneten DDGS bei 25-35 °C durch Ausbreiten in dem Lagerbereich oder Behandeln mit einem Kaskadenluftkühler und Einsacken zum Transport an die Endbenutzer.

2. Prozess nach Anspruch 1, wobei der Stärkebrei bevorzugt aus Getreide-Sorghum, Mais, Bruchreis, gekochtem Reis und Maniokstärke besteht.

3. Prozess nach Anspruch 1, wobei der Stärkebrei besonders bevorzugt aus Bruchreis und/oder gekochtem Reis besteht, was das Trocknen der CDS zu feuchten Feststoffen in einem Bereich von 0,8-1,7 erlaubt.

4. Prozess nach Anspruch 1, wobei der pH-Wert der gesamten Schlempe optional auf einen neutralen oder leicht basischen pH-Wert im Bereich zwischen 6,5 und 7,0 eingestellt werden kann, um Proteine zu trennen.

5. Prozess nach Anspruch 4, wobei der pH-Wert unter Nutzung von Kalk/Kalilauge/Flockungsmittel eingestellt wird.

6. Prozess nach Anspruch 1, wobei die DWG und CDS aus der stärkebasierten Ethanoldestillation unter Nutzung eines Mischers/Mixers in einem Verhältnis gemischt werden, in dem der Feststoffgehalt von DDGS/DWG 1,9 bis 2,8 beträgt, und CDS hinzugefügt wird, um ein Feststoffmaximum von 30 % der Feststoffe der DWG zu erhalten, um eine Mischung mit etwa 50 % bis 60 % Feststoffgehalt oder bevorzugt 52 % bis 55 % Feststoffgehalt vor der ersten Stufe zu erhalten.

7. Prozess nach Anspruch 1, wobei der Wirbelschnelltrockner/Stiftmühlen-Schnelltrockner bevorzugt über eine eingebaute Reibungsmühle/einen eingebauten Zerkleinerer horizontaler oder vertikaler Bauart verfügt.

8. Prozess nach einem der vorhergehenden Ansprüche, der DDGS zur Verwendung als Tierfutter ergibt, die bevorzugt eine Partikelgröße von 600-2000 Mikrometern und einen Feuchtigkeitsgehalt von 10-12 % aufweist.

9. Prozess nach einem der vorhergehenden Ansprüche, der DDGS zur Verwendung als Tierfutterergänzungsmittel ergibt, die einen besseren Nährwert aufweist, wobei der Proteingehalt 37-53 %, der Fettgehalt 10-11 %, der Rohfasergehalt 6,2 %, der Aschegehalt 7-8 %, der stickstofffreie Extrakt (Nitrogen Free Extract, NFE)-Gehalt 42 % und der Gerüstsubstanzen (Acid Detergent Fiber, ADF)-Gehalt bis zu 11 % betragen.

## Revendications

1. Procédé amélioré pour le séchage de solides humides (DWG) et de solubles de distillerie de condensés (CDS) issus de la distillerie d'éthanol à base d'amidon pour obtenir des drêches de distillerie séchées avec solubles (DDGS), ledit procédé comprenant :
a. la décantation de drêches de distillerie complètes contenant des solides après fermentation et distillation d'alcool pour séparer des solides humides (DWG) et les résidus dilués de distillation,
b. la concentration de résidus dilués de distillation à l'aide d'une combinaison d'évaporateur intégré et d'évaporateur vapeur pour obtenir des CDS de 30 % à 50 % en poids,
c. le mélange des DWG et des CDS avec des DDGS sèches pour obtenir un mélange avec ∼60° comme angle de repos et 45 % à 60 % de solides, les DWG et les CDS provenant de distillerie d'éthanol à base d'amidon étant séchés à l'aide d'un séchoir à deux étages ;
d. la soumission du mélange de l'étape (c) à un séchoir rotatif de faisceaux de tubes à vapeur de premier étage pour le séchage intermédiaire à l'aide d'une vapeur basse pression à 3,5 à 6 bar g et à une température de matériau de 85 à 95 °C, le séchoir rotatif de faisceaux de tubes à vapeur de premier étage se composant d'un faisceau de tubes horizontaux à travers lequel la vapeur passe et le mélange DWG, CDS et DDGS circule pour le séchage par rotation du séchoir à une vitesse de 1 à 4 tr/min,
e. le mélange de DDGS semi-séchées avec des CDS et des DDGS séchées pour obtenir un mélange d'environ 20 % à 40 % de solides ou de préférence 22 % à 35 % de solides en poids avant le second étage,
f. la soumission du mélange de premier étage de DDGS semi-séchées, de CDS et de DDGS séchées au séchoir pneumatique centrifuge/séchoir pneumatique de type broyeur à broches, le séchage utilisant de l'air chaud à une température de 90 à 150 °C, et la collecte des DDGS séchées sans aucun pâton dur d'une taille de plus de 2 à 3 mm dans un silo au moyen d'un système de convoyeur,
g. le refroidissement des DDGS séchées à 25 à 35 °C par dispersion dans la zone de stockage ou soumission à un refroidisseur d'air de type cascade et l'ensachage pour le transport vers les utilisateurs finaux.

2. Procédé selon la revendication 1, dans lequel la base d'amidon est de préférence issue de sorgho à graine, de maïs, de brisures de riz, de riz bouilli et de fécule de manioc.

3. Procédé selon la revendication 1, dans lequel la base d'amidon est de manière davantage préférée des brisures de riz, et/ou du riz bouilli permettant le séchage de CDS à solides humides, dans une plage de 0,8-1,7.

4. Procédé selon la revendication 1, dans lequel le pH des drêches de distillerie complètes peut facultativement être ajusté à un pH neutre ou légèrement alcalin allant de 6,5 à 7,0 pour séparer les protéines.

5. Procédé selon la revendication 4, dans lequel le pH est ajusté à l'aide de chaux/substance caustique/floculant.

6. Procédé selon la revendication 1, dans lequel les DWG et les CDS issus de la distillerie d'éthanol à base d'amidon sont mélangés à des DDGS sèches à l'aide d'un mélangeur/malaxeur dans une proportion dans laquelle le rapport DDGS/solides DWG est de 1,9 à 2,8 et les CDS sont ajoutés pour que les solides CDS soient au maximum de 30 % des solides DWG afin d'obtenir un mélange d'environ 50 % à 60 % de solides ou de préférence 52 % à 55 % de solides en poids avant le premier étage.

7. Procédé selon la revendication 1, dans lequel le séchoir pneumatique centrifuge/séchoir pneumatique de type broyeur à broches est de préférence avec agitateur/désintégrateur intégré de construction horizontale ou verticale.

8. Procédé selon l'ensemble des revendications précédentes produisant des DDGS à utiliser en tant qu'alimentation animale ayant de préférence des particules d'une taille de 600 à 2 000 microns et 10 à 12 % de teneur en humidité.

9. Procédé selon l'ensemble des revendications précédentes, qui produit des DDGS à utiliser en tant que complément d'alimentation animale, ayant une meilleure valeur nutritionnelle, dans lequel la teneur en protéine est de 37 à 53 %, en graisse de 10 à 11 %, en fibres brutes de 6,2 %, la minéralisation est de 7 à 8 %, la teneur en extrait non azoté (NFE) de 42 % et en fibres au détergent acide (ADF) d'au plus 11 %.
